# EUROPÄISCHE PATENTSCHRIFT

(11) **EP 3 085 229 B1**
(45) Veröffentlichungstag und Bekanntmachung des Hinweises auf die Patenterteilung: **17.01.2018**
(21) Anmeldenummer: 16401026.6
(22) Anmeldetag: 15.04.2016
(51) Int. Cl.: A01M 7/00

(54) **VERFAHREN ZUR STEUERUNG EINES FLÜSSIGKEITSKREISLAUFS EINER VERTEILMASCHINE**
CONTROL METHOD FOR A FLUID CIRCUIT OF A DISTRIBUTING MACHINE
PROCÉDÉ DE RÉGLAGE D'UN CIRCUIT DE LIQUIDE POUR ÉPANDEUR

(30) Priorität: 20.04.2015 DE 102015105968
(43) Veröffentlichungstag der Anmeldung: 26.10.2016
(73) Patentinhaber: Amazonen-Werke H. Dreyer GmbH & Co. KG, 49205 Hasbergen (DE)
(72) Erfinder: Heitmeyer, Kilian, 49152 Bad Essen (DE); Holtkötter, Christian, 33775 Versmold (DE); Kühn, Christoph, 49080 Osnabrück (DE); Heer, Jochen, 49074 Osnabrück (DE)

(56) Entgegenhaltungen:
- EP-A2- 1 958 506
- EP-A2- 2 153 710
- EP-A2- 2 425 714
- DE-A1-102004 040 807

## Beschreibung

Die vorliegende Erfindung betrifft den Flüssigkeitskreislauf einer Verteilermaschine und ein Verfahren zur Steuerung desselben.
Verteilmaschinen, insbesondere Feldspritzen, verfügen im Allgemeinen über ein Ausbringorgan, insbesondere eine Düse, zum Ausbringen sowie einen Vorratsbehälter zur Aufbewahrung des auszubringenden Guts. Um eine optimale Durchmischung des auszubringenden Guts, insbesondere des Spritzmittels, zu gewährleisten, hat es sich bewährt während des Ausbringvorganges das auszubringende Gut, insbesondere Spritzmittel, permanent zu durchmischen. Zu diesem Zweck befindet sich in dem Vorratsbehälter ein Rührwerk.
Eine solche Ausgestaltung ist beispielsweise durch die Schrift DE 10 2004 040 807 A1 offenbart. Diese zeigt den Flüssigkeitskreislauf einer Feldspritze mit den Düsen eines Spritzgestänges, einem Vorratsbehälter, einer Pumpe, einem Rührwerk und anderen Komponenten. Zu Durchmischung der sich im Vorratsbehälter befindlichen Spritzlösung wird permanent ein festgelegter Teil der Pumpleistung verwendet. Nachteilig ist, dass das System permanent mit konstanter Leistung das auszubringende Gut im Vorratsbehälter mittels des Rührwerks umwälzt.
Die EP 2 153 710 A2 zeigt einen Flüssigkeitskreislauf, der bereits die Möglichkeit einer Anpassung der Rührwerksleistung bietet.
Aufgabe der vorliegenden Erfindung ist es daher, einen Flüssigkeitskreislauf bereitzustellen, der in optimierter Art und Weise einen Rührvorgang des sich im Vorratsbehälter befindlichen Guts durchführt.
Es ist vorgesehen, dass von einer elektronischen Steuereinheit die Ausbringrate und/oder der Rührvorgang mittels der Ventilstellungen der den Flüssigkeitskreislauf steuernden Regelventile auf der Basis der Daten von zumindest zwei Messvorrichtungen eingestellt wird. Somit kann mittels der zumindest zwei Regelventile ein optimierter Betrieb des Rührwerks vorgenommen werden.
In einer vorteilhaften Ausgestaltung wird nun der Teil der Pumpleistung, welcher nicht für die Ausbringung des Guts benötigt wird, zum Umwälzen und/oder Verrühren des Guts im Vorratsbehälter verwendet. Somit kann der Rührprozess immer mit maximal möglicher Leistung durchgeführt werden.

In einer vorteilhaften Weiterbildung wird mittels einer dritten Messvorrichtung der Füllstand des Vorratsbehälters bestimmt und durch die elektronische Steuereinheit die Messwerte dieses Füllstandssensors bei der Regelung des Ausbringvorganges und/oder Rührvorganges berücksichtigt.

In einer möglichen Weiterbildung wird zusätzlich mittels einer vierten Messvorrichtung die Pumpenleistung und/oder Pumpendrehzahl der Feldspritze erfasst und diese bei der Regelung des Rührvorganges und/oder Ausbringvorganges berücksichtigt. Somit kann, wenn beispielsweise niedrigere Rührleistungen benötigt werden, eine Anpassung der Pumpleistung in vorteilhafter Weise vorgenommen werden.

In einer vorteilhaften Weiterbildung ist zumindest eine fünfte Messvorrichtung, vorzugsweise Druckmesser und/oder Durchflussmengenmesser und/oder Stellungsrückmeldung zumindest des Regelventils, in der Leitung zum Rührwerk, insbesondere in dem Leitungsabschnitt zwischen dem zweiten Regelventil und dem Rührwerk, angebracht und die entsprechenden Messwerte werden von der elektronischen Steuereinheit bei der Einstellung der Regelventile berücksichtigt. Auf diese Weise ist eine noch genauere Charakterisierung und Steuerung des Flüssigkeitskreislaufes möglich.

Die gestellte Aufgabe wird gelöst durch das Regelungsverfahren des Flüssigkeitskreislaufes entsprechend dem kennzeichnenden Teil des Verfahrensanspruches 1, wobei die Ausbringrate und/oder der Rührvorgang mittels der Ventilstellungen auf der Basis der Daten der zumindest zwei Messvorrichtungen derart eingestellt wird, dass der Teil der Pumpleistung, der nicht zur Ausbringung des Guts benötigt wird, zum Umwälzen und/oder Verrühren des Guts im Vorratsbehälter dient.Es ist vorgesehen, während des Verteilprozesses standardmäßig zumindest einen geringen Pufferstrom, vorzugsweise annähernd 10 % der Pumpleistung, über das zweite Regelventil zu leiten und dass der übrige Teil der Pumpleistung, welcher nicht zur Ausbringung des Guts benötigt wird, zum Umwälzen und/oder Verrühren des Guts im Vorratsbehälter dient. Dies dient dazu bei Schwankungen der Ausbringrate, beispielsweise aufgrund von Geschwindigkeitsvariationen der Ausbringvorrichtung, eine schnelle Anpassung des zu der zumindest einen Düse beförderten Guts zu bewirken. Ein erstes Regelventil steuert den Anteil des beförderten Guts der zum Rührwerk geleitet wird. Diese Anordnung ermöglicht es im Vergleich zum Stand der Technik immer den größtmöglichen Anteil der verfügbaren Pumpleistung für den Betrieb des Rührwerkes zu verwenden.

In einer vorteilhaften Ausgestaltung wird bei ausgeschaltetem Verteilprozess, vorzugsweise bei Transportfahrten oder dem Wenden im Vorgewende, ein Großteil, vorzugsweise zumindest annähernd 90 % der Pumpleistung für das Umwälzen des Guts im Vorratsbehälter verwendet. Hierdurch wird in optimierter Weise die frei werdende Pumpleistung für ein verstärktes Umwälzen des sich im Vorratsbehälter befindlichen Guts verwendet.

In einer Weiterbildung der vorliegenden Erfindung wird eine weitere Messvorrichtung zur Bestimmung des Füllstandes des Guts im Vorratsbehälter dient und auf der Basis der Daten dieser Messvorrichtung die Leistung des Rührwerkes bei abnehmendem Füllstand reduziert wird, indem die Pumpleistung der Pumpe reduziert und/oder der Anteil des Guts, welcher über das zweite Regelventil geleitet wird, erhöht. Auf diese Weise kann beispielsweise bei schäumenden Spritzmitteln eine erhöhte Schaumbildung bei sinkenden Flüssigkeitsspiegel und gleichbleibender Rührleistung des Rührwerks verhindert werden.

In einer vorteilhaften Weiterbildung wird zusätzlich mittels einer weiteren Messvorrichtung die Pumpendrehzahl und/oder die Pumpenleistung der Feldspritzenpumpe ermittelt und auf der Basis der Daten dieser Messvorrichtung die Leistung des Rührwerkes bei abnehmendem Füllstand reduziert wird, indem die Pumpleistung der Pumpe reduziert und/oder der Anteil des Guts, welcher über das zweite Regelventil geleitet wird, erhöht wird. Hierdurch kann in vorteilhafter Weise die Leistung der Spritzmittelpumpe an die jeweiligen Anforderungen angepasst werden.

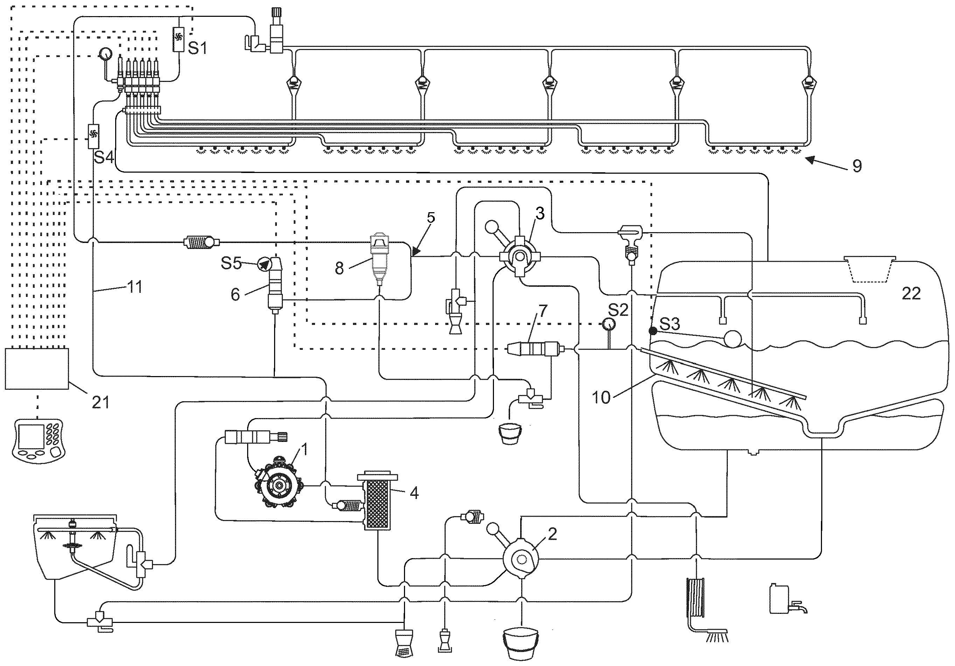

Weitere Einzelheiten der Erfindung sind der Beispielsbeschreibung und der Zeichnung zu entnehmen. Hierbei zeigt
Fig.1 den erfindungsgemäßen Flüssigkeitskreis.

Figur 1 zeigt einen Flüssigkeitskreislauf einer landwirtschaftlichen Feldspritze. Das zu befördernde Gut erreicht vom Vorratsbehälter 22 über den Saughahn 2 und den Filter 4 die Pumpe 1. Von dort passiert das auszubringende Gut über den Druckhahn 3 die zweite Abzweigung 5, bevor es über den Filter 8 und die Messvorrichtung S1 die Ausbringdüse bzw. Ausbringdüsen 9 erreicht. Von der zweiten Abzweigung führt ein zweiter Pfad zu dem Regelventil 6, welches über eine Stellungsrückmeldung verfügt. Der Ausgang des Regelventils mündet in den Filter 4 und damit die Leitung zwischen dem Vorratsbehälter und der Pumpe. Der Druckfilter 8 bildet eine erste Abzweigung, wovon der erste Pfad, wie beschrieben, in Richtung der Ausbringdüsen 9 führt, während der zweite Pfad zu dem Regelventil 7, welches vorzugsweise als variable Blende ausgestaltet ist, führt. Der Ausgang des Regelventils mündet in das Rührwerk 10. Zur Erfassung der Volumenströme zu den Düsen und/oder dem Rührwerk können in den entsprechenden Zuleitungen Messvorrichtungen S1 und/oder S2, vorzugsweise Durchflusssensoren und/oder Drucksensoren und/oder Stellungsrückmelder der Regelventile, angebracht sein.

In dem vorliegenden Beispiel befindet sich der Durchflussmesser S1 zur Bestimmung der Ausbringmenge in der Leitung zu den Ausbringdüsen. Ein weiterer Sensor S2, hier beispielhaft ausgestaltet als Drucksensor, dient zur Bestimmung des Volumenstromes zu dem Rührwerk 10. Des Weiteren verfügt das Regelventil 6 über eine Stellungsrückmeldung. Die Sensorsignale der Drucksensoren und/oder der Durchflussmesser und/oder der Stellungsrückmeldung werden an den Jobrechner 21 übermittelt.

Der Jobrechner 21 steuert die einzelnen Komponenten des Flüssigkeitskreislaufes. Beispielsweise kann dies den Einspülprozess und den Ausbringprozess umfassen. Während des Ausbringens des Guts kann vorzugsweise der Jobrechner die Ausbringrate und das Öffnen der verschiedenen Teilbreiten entsprechend hinterlegter Applikationskarten steuern.

Zur optimierten Steuerung des Flüssigkeitskreislaufes regelt der Jobrechner 21 in erfindungsgemäßer Weise den Öffnungsgrad der Ventile 6 und 7 entsprechend der geforderten Sollausbringmenge. Überdies kann eine Leistungsregelung der Pumpe 1 mittels des Jobrechners 21 realisiert sein.

Konkret werden die beiden Regelventile derart angesteuert, dass erstens die gewünschte Ausbringmenge mittels der Ausbringdüsen verteilt wird. Zweitens soll ein kleiner Teil des vorhandenen Volumenstromes als Reserve über das Regelventil 6 in die Leitung zwischen dem Vorratsbehälter 22 und der Pumpe 1 zurückgespeist werden. Dies ermöglicht kleinere Schwankungen der geforderten Ausbringrate, beispielsweise aufgrund von Geschwindigkeitsänderungen, welche mittels eines hier nicht dargestellten Geschwindigkeitssensors detektiert werden können, zügig zu berücksichtigen. Der Rest der vorhandenen Pumpleistung wird in vorteilhafter Weise über den Druckfilter 8 dem Rührwerk 10 zugeführt.

Die Stellungsrückmeldung des im Vergleich zu dem als Blende ausgestalteten Regelventils 7 schneller ansprechenden Regelventils 6 ermöglicht es dem Jobrechner 21, das Verhältnis der Volumenströme durch die Ventile 6 und 7 abzuschätzen und außerdem festzustellen, ob die Stellung des Regelventils 6 für den Ausgleich von Schwankungen der Ausbringrate ausreichend ist. Das Regelventil 6 soll hierfür während des Ausbringprozesses vorzugsweise mindestens einen Öffnungsgrad von 10 % aufweisen.

Bei geschlossenen Teilbreiten, beispielsweise während der Fahrt im Vorgewende, wird automatisch eine sehr viel größere Menge des auszubringen Guts zum Rührwerk geleitet und somit eine sehr viel höhere Rührleistung erzielt.

In dem vorliegenden Beispiel befindet sich im Vorratsbehälter 22 ein weiterer Sensor S3, welcher den Füllstand des Guts in dem ausbringen Behälter 22 detektiert. Das Messsignal dieses Sensors S3 wird ebenfalls an den Jobrechner 21 gemeldet.
Dieses ermöglicht in vorteilhafter Weise, beispielsweise für schäumende Spritzmittel, eine Reduktion der Rührleistung des Rührwerks 10 bei abnehmendem Füllstand des Vorratsbehälters 22. Dieses kann mittels einer Reduktion der Pumpleistung und/oder durch ein Öffnen des Regelventils 6 und Schließen des Ventils 7 mit abnehmendem Flüssigkeitsstand erreicht werden. Letzteres bewirkt bei gleichbleibender Pumpleistung, dass ein größerer Anteil des geförderten Guts über das Regelventil 6 in die Leitung zwischen dem Vorratsbehälter 22 und der Pumpe 1 zurückgeleitet wird.

Der Erfindungsgedanke beinhaltet zudem für den Fachmann nahe liegende und dem Geist der Erfindung entsprechende Modifikationen. Beispielsweise kann eine Stellungsrückmeldung alternativ oder zusätzlich an dem Ventil 7 angebracht sein. Auch ist denkbar jegliche Messvorrichtung als Durchflussmesser, Druckmesser oder Stellungsrückmeldung eines sich an dieser Stelle befindlichen Ventils zu realisieren. Letztlich können alle diese Vorrichtungen verwendet werden um den an dieser Stelle abfallenden Strom des Guts zu bestimmen.

Auch ist es möglich den hier als Flüssigkeitskreislauf einer Feldspritze dargestellten Aufbau für andere Verteilmaschinen zu verwenden. Dies umfasst insbesondere pneumatische Verteilmaschinen wie Düngersteuer und Sämaschinen. Beispielsweise ist denkbar bei einem pneumatischen Düngersteuer einen Teil des auszubringen Guts derart in den Tank zuzuleiten, dass ein sich dort befindliche Mischdünger fortwährend durchmischt wird, beispielsweise um eine zunehmende Segregation, hervorgerufen beispielsweise durch Erschütterungen während der Fahrt, entgegenzuwirken. Die hier aufgeführten Komponenten wie Ventile und Durchflussmesser müssen hierfür lediglich angepasst werden, um die analogen Größen der Verteilung körnigen Guts zu bestimmen und zu steuern.

## Patentansprüche

1. Verfahren zur Steuerung des Flüssigkeitskreislaufes einer Verteilmaschine mit zumindest,
- einem Vorratsbehälter (22), insbesondere Flüssigkeitstank, für das auszubringende Gut, insbesondere Spritzmittel,
- einer oder mehrerer Düsen (9) zum Ausbringen des Guts,
- einem Rührwerk (10) im Inneren des Vorratsbehälters (22) zum Verrühren und/oder Umwälzen des auszubringenden Guts, mittels des Einführens des Gutes selbst,
vorzugsweise mittels zumindest einer Düse,
- einer Pumpe (1) zur Förderung des auszubringenden Guts von dem Vorratsbehälter (22) zu der zumindest einen Düse (9),
- einer ersten Abzweigung (8) der Leitung zwischen der Pumpe (1) und der zumindest einen Düse (9), welche zum Rührwerk (10) führt und einen Teil des Gutstromes zu der zumindest einen Düse (9) zum Rührwerk (10) hin abzweigt,
- einer zweiten Abzweigung (5) zwischen der Pumpe (1) und der zumindest einen Düse (9), welche einen Teil des Gutstromes zu der Leitung zwischen dem Vorratsbehälter (22) und der Pumpe (9) oder dem Vorratsbehälter (22) selbst oder einem sich in diesem Abschnitt befindlichen Bauteil, wie vorzugsweise einem Filter (4), zurückleitet
- einem ersten Regelventil (7) zur Drosselung des Volumenstromes zwischen der ersten Abzweigung (8) und dem Rührwerk (10)
- einem zweiten Regelventil (6) zur Drosselung des Volumenstromes zwischen der zweiten Abzweigung (5) und der Leitung zwischen dem Vorratsbehälter (22) und der Pumpe (1)
- einer ersten Messvorrichtung (S1), insbesondere Druckmesssonde und/oder Durchflussmengenmesser, zur Messung des Volumenstromes welcher unmittelbar von der zumindest einen Düse (9) ausgebracht wird,
- zumindest einer zweiten Messvorrichtung (S2,S5), insbesondere Druckmesssonde und/oder Durchflussmengenmesser und/oder Stellungsrückmeldung zumindest eines der Regelventile (6,7), zur Messung des Volumenstromes von der ersten Abzweigung (8) zum Rührwerk (10) und/oder des Volumenstromes von der zweiten Abzweigung (5) zur Leitung zwischen dem Vorratsbehälter (22) und der Pumpe (1),
- elektronische Steuereinheit (21) zur Steuerung der Ausbringrate und/oder des Rührvorganges ,
**dadurch gekennzeichnet, dass**
die Ausbringrate und/oder der Rührvorgang mittels der Ventilstellungen auf der Basis der Daten der zumindest zwei Messvorrichtungen (S1,S2,S5) derart eingestellt wird, dass der Teil der Pumpleistung, der nicht zur Ausbringung des Guts benötigt wird, zum Umwälzen und/oder Verrühren des Guts im Vorratsbehälter (22) dient und dass während des Verteilprozesses standardmäßig zumindest ein geringer Pufferstrom, vorzugsweise annähernd 10 % der Pumpleistung, über das zweite Regelventil (6) geleitet wird und der übrige Teil der Pumpleistung, welcher nicht zur Ausbringung des Guts benötigt wird, zum Umwälzen und/oder Verrühren des Guts im Vorratsbehälter (22) dient.

2. Verfahren nach Anspruch 1, **dadurch gekennzeichnet, dass** bei ausgeschaltetem Verteilprozess, vorzugsweise bei Transportfahrten oder dem Wenden im Vorgewende, ein Großteil, vorzugsweise zumindest annähernd 90 %, der Pumpleistung für das Umwälzen des Guts im Vorratsbehälter (22) verwendet wird.

3. Verfahren nach zumindest einem der Ansprüche 1 oder 2, **dadurch gekennzeichnet, dass** eine weitere Messvorrichtung (S3) zur Bestimmung des Füllstandes des Guts im Vorratsbehälter (22) dient und auf der Basis der Daten dieser Messvorrichtung (S3) die Leistung des Rührwerkes (10) bei abnehmendem Füllstand reduziert wird, indem der Anteil des Guts, welcher über das zweite Regelventil (6) geleitet wird, erhöht wird.

4. Verfahren nach zumindest einem der Ansprüche 1 bis 3, **dadurch gekennzeichnet, dass** eine weitere Messvorrichtung zur Bestimmung der Pumpendrehzahl und/oder der Pumpenleistung der Feldspritzenpumpe dient und auf der Basis der Daten dieser Messvorrichtung die Leistung des Rührwerkes (10) bei abnehmendem Füllstand reduziert wird, indem die Pumpleistung der Pumpe (1) reduziert und/oder der Anteil des Guts, welcher über das zweite Regelventil (6) geleitet wird, erhöht wird.

## Claims

1. Method for controlling the liquid circuit of a distributing machine, with at least
- a storage container (22), in particular liquid tank, for the material to be discharged, in particular sprays,
- one or more nozzles (9) for discharging the material,
- an agitator (10) in the interior of the storage container (22) for agitating and/or circulating the material to be discharged, by means of the introduction of the material itself, preferably by means of at least one nozzle,
- a pump (1) for conveying the material to be discharged from the storage container (22) to the at least one nozzle (9),
- a first branch (8) of the line between the pump (1) and the at least one nozzle (9), said branch leading to the agitator (10) and branching off some of the flow of material to the at least one nozzle (9) towards the agitator (10),
- a second branch (5) between the pump (1) and the at least one nozzle (9), said branch conducting some of the flow of material back to the line between the storage container (22) and the pump (9) or to the storage container (22) itself or to a component located in said section, such as, preferably, a filter (4),
- a first regulating valve (7) for throttling the volumetric flow between the first branch (8) and the agitator (10),
- a second regulating valve (6) for throttling the volumetric flow between the second branch (5) and the line between the storage container (22) and the pump (1),
- a first measuring device (S1), in particular pressure-measuring probe and/or flow meter, for measuring the volumetric flow which is discharged directly by the at least one nozzle (9),
- at least one second measuring device (S2, S5), in particular pressure-measuring probe and/or flow meter and/or position feedback of at least one of the regulating valves (6, 7), for measuring the volumetric flow from the first branch (8) to the agitator (10) and/or the volumetric flow from the second branch (5) to the line between the storage container (22) and the pump (1),
- an electronic control unit (21) for controlling the discharge rate and/or the agitating operation,
**characterized in that**
the discharge rate and/or the agitating operation are/is adjusted by means of the valve positions on the basis of the data from the at least two measuring devices (S1, S2, S5) in such a manner that that part of the pumping power which is not required for discharging the material serves for circulating and/or agitating the material in the storage container (22), and **in that** as standard during the distributing process at least a small buffer flow, preferably approximately 10% of the pumping power, is conducted via the second regulating valve (6) and the remaining part of the pumping power that is not required for discharging the material serves for circulating and/or agitating the material in the storage container (22).

2. Method according to Claim 1, **characterized in that**, when the distributing process is switched off, preferably during transport journeys or during turning in the headland, a large part, preferably at least approximately 90%, of the pumping power is used for circulating the material in the storage container (22).

3. Method according to at least either of Claims 1 and 2, **characterized in that** a further measuring device (S3) serves for determining the filling level of the material in the storage container (22), and, on the basis of the data of said measuring device (S3), the power of the agitator (10) is reduced as the level decreases by the portion of the material which is conducted via the second regulating valve (6) being increased.

4. Method according to at least one of Claims 1 to 3, **characterized in that** a further measuring device serves for determining the rotational speed of the pump and/or the pumping power of the field spray pump and, on the basis of the data from said measuring device, the power of the agitator (10) is reduced as the level decreases by the pumping power of the pump (1) being reduced and/or the portion of the material which is conducted via the second regulating valve (6) being increased.

## Revendications

1. Procédé de commande du circuit de fluide d'une machine distributrice comprenant au moins,
- un réservoir (22), en particulier un réservoir de fluide, pour la matière à distribuer, en particulier un fluide à pulvériser,
- une ou plusieurs buses (9) pour distribuer la matière,
- un agitateur (10) à l'intérieur du réservoir (22) pour agiter et/ou faire circuler la matière à distribuer, au moyen de l'introduction de la matière elle-même, de préférence au moyen d'au moins une buse,
- une pompe (1) pour transporter la matière à distribuer depuis le réservoir (22) vers la au moins une buse (9),
- une première bifurcation (8) de la conduite entre la pompe (1) et la au moins une buse (9), laquelle conduit vers l'agitateur (10) et dérive vers l'agitateur (10) une partie du flux de matière dirigé vers la au moins une buse (9),
- une deuxième bifurcation (5) située entre la pompe (1) et la au moins une buse (9), laquelle reconduit une partie du flux de matière vers la conduite entre le réservoir (22) et la pompe (9) ou vers le réservoir (22) lui-même ou vers un composant disposé dans ce segment tel que, de préférence, un filtre (4),
- une première soupape de réglage (7) pour réduire le débit volumétrique entre la première bifurcation (8) et l'agitateur (10)
- une deuxième soupape de réglage (6) pour réduire le débit volumétrique entre la deuxième bifurcation (5) et la conduite entre le réservoir (22) et la pompe (1),
- un premier dispositif de mesure (S1), en particulier une sonde de mesure de pression et/ou un débitmètre, pour la mesure du débit volumétrique distribué directement par la au moins une buse (9),
- au moins un deuxième dispositif de mesure (S2,S5), en particulier une sonde de mesure de pression et/ou un débitmètre et/ou un indicateur de position d'au moins une des soupapes de réglage (6,7), pour la mesure du débit volumique de la première bifurcation (8) vers l'agitateur (10) et/ou du débit volumique de la deuxième bifurcation (5) vers la conduite entre le réservoir (22) et la pompe (1),
- une unité de commande électronique (21) pour commander le débit de distribution et/ou le procédé d'agitation,
**caractérisé en ce que**
le débit de distribution et/ou le procédé d'agitation est réglé au moyen des positions des soupapes sur la base des données des au moins deux dispositifs de mesure (S1,S2,S5) de telle sorte que la fraction de la puissance de pompage qui n'est pas nécessaire à la distribution de la matière sert à faire circuler et/ou à agiter la matière à l'intérieur du réservoir (22) et que, pendant le procédé de distribution, au moins un faible débit de compensation, de préférence presque 10% de la puissance de pompage, est conduit par défaut à travers la deuxième soupape de réglage (6) et que la fraction restante de la puissance de pompage qui n'est pas nécessaire à la distribution de la matière sert à faire circuler et/ou à agiter la matière à l'intérieur du réservoir (22).

2. Procédé selon la revendication 1, **caractérisé en ce que**, lorsque le procédé de distribution est arrêté, de préférence lors de déplacements de transport ou lors de demi-tours en tournière, une grande partie, de préférence au moins approximativement 90%, de la puissance de pompage est utilisée pour faire circuler la matière à l'intérieur du réservoir (22).

3. Procédé selon au moins l'une des revendications 1 et 2, **caractérisé en ce qu'**un autre dispositif de mesure (S3) sert à déterminer le niveau de remplissage de la matière à l'intérieur du réservoir (22) et **en ce que**, sur la base des données de ce dispositif de mesure (S3), la puissance de l'agitateur (10) est réduite lorsque le niveau de remplissage diminue, en augmentant la fraction de la matière qui est conduite à travers la deuxième soupape de réglage (6).

4. Procédé selon au moins l'une quelconque des revendications 1 à 3, **caractérisé en ce qu'**un autre dispositif de mesure sert à déterminer la vitesse de la pompe et/ou la puissance de pompage de la pompe agricole et **en ce que**, sur la base des données de ce dispositif de mesure, la puissance de l'agitateur (10) est réduite lorsque le niveau de remplissage diminue, en réduisant la puissance de pompage de la pompe (1) et/ou en augmentant la fraction de la matière qui est conduite à travers la deuxième soupape de réglage (6).
